# EUROPEAN PATENT APPLICATION

(11) **EP 2 180 584 A2**
(43) Date of publication of application: **28.04.2010**
(21) Application number: 09425174.1
(22) Date of filing: 06.05.2009
(51) Int. Cl.: H02K 53/00

(54) **Device production free energy**

(30) Priority: 23.10.2008 IT CE20080010
(71) Applicant: Santonicola, Antonio, 81030 Cancello ed Arnone (CE) (IT)
(72) Inventor: Santonicola, Antonio, 81030 Cancello ed Arnone (CE) (IT)

(57) **Abstract**

Drawn aside himself/herself/themselves of one or more elements "circular rotatory" on only axle; and one or more mechanisms of push, both drawees with permanent magnets that positioned in appropriate way on all the elements, produce strengths of spingimento and traction in the moment and to the correct point, these strengths they allow the mechanism of push to automatically provoke a push to repetition for the element "circular rotatory" that it rotates in perpetual way.

The speed and the strength of rotation it depends from the consistence of the permanent magnets and from the consistence of the elements that you/they compose him/it.

## Description

### Premise:

According to the information possessed by the undersigned, devices of the kind don't currently exist, otherwise you/they would certainly be exploited, seen the lack of alternative energy to cost zero and the safeguard of the environment. Searches have been effected for regulating funzionanti that exploits the same principles, is ascertained that in quite a lot cases the projects have been abandoned because the parties were mostly assembled to other solutions on the magnetism to develop a device.

The alternative principal energy which reference currently does him is the Solar one, the eolico etc., these energies to be able to be exploited at the most always ask not for natural conditions available besides the fittingses for the use they are very expensive, while the device under described and completely autonomous, it doesn't provoke besides anybody form of pollution its cost it is very contained because of its simplicity, its duration it is very long because magnets have been employed permanent and any element subject to usury.

### Description:

And known that in physics two strengths of different sign are attracted while of equal sign they are rejected, to realize the found one is had the idea to exploit the principle of the strengths that they are rejected and they are attracted.

The found one and composed of two or more "elements circular rotatory" (table I draw n. 1) positioned all on an only axle and realized for the demand with material that he doesn't allow to influence from the magnetic flow (aluminum, brass etc.) and two or more "mechanisms of push" (table I draw n. 3);
on both the external façades of the elements "circular rotatory" I/you/they have been fixed some permanent magnets of strength and characteristics in base to the greatness of the elements "circular rotatory" and to the specific demands of strength and rotation, such magnets will serve as receivers of pushed by the mechanism of push subsequently described, on the elements "circular rotatory" employed: the magnets have adequately been positioned among them, the position, has been calculated so that to allow the times of synchronism of the whole mechanism and all with external pole of the same sign; while on the frontal external part of the circumference of the rotatory circular elements I/you/they have relatively been fixed some permanent magnets of low strength and positioned to distance syncronized with the magnets receivers of push, these last of low strength they have only relatively the assignment to pilot the mechanism of push to them associates, provoking I unhook him/it to the correct moment of the zippers integrated in the various mechanisms of push.

Mechanisms of push entirely realized in steel and aluminum composed by three parts: the first denominated part "auction of anchorage" adaptable to every specific demand also how adjustable, realized in this circumstance with two bars in steel and with holes for the assemblage, so that to be able to be adjustable in base to the demand;
the second part is one "particular zipper" (table I draw n. 4), particular because its outline is adapted in appropriate way to the demand, the integrated zipper in every mechanism of push is the element that assembled as specified following, it will serve to provoke the push to repetition to make to rotate the element "circular rotatory" to her associate, such zipper has a rotation of 30 degrees on both the sides, on the low part of one of the wings of the zipper, more or less toward the half, and fixed a half collar that on the side ones of this last, two have fixed "magnets permanent" that they serve for the push, with characteristics equal to the magnets receivers of push of the element "circular rotatory, positioned so that to final assemblage is found to appropriate distance and in front of the magnets "receivers of push" of the element "circular rotatory" and has the toward external of the same pole. Through the auction of anchorage it will be possible to adequately outdistance them with those of the element "circular rotatory" so that, the same to the realization of the cycle of rotation, don't provoke the frenatura of the element "circular rotatory" besides, on the two extremities of the wings of the zipper others two have fixed "magnets permanent" how in partnership with the magnets he/she pilots some element "circular rotatory" and those of the fixed part subsequently described serve from control for the various phases that it will go to perform the same zipper and for the regulation of strength and speed of push.

The third part "fixed part" (table I draw n. 4)
what it composes the mechanism of push and immediately fixed behind the zipper and it has the form of a multiple cross, the longest auction that vertical serves from support for those more court horizontal, on these last ones they have fixed to the extremities of the you bear filleted in brass that you/they serve to regulate the correct position of as many "magnets permanent" climbed on on the same, the correct position regulates the strength of push of the zipper and particularly the sensibility of I unhook, such sensibility is important in how much I unhook him/it you/he/she is determined in alternation by the "magnets he/she pilots" sets on the element "circular rotatory." In phase of rotation such sensibility reduces at the most the partial frenatura of the element "circular rotatory" even if compensated by a greater push; this last detail with the aid of all the shrewdness and the elements that compose him/it and the combination of the strengths that they are attracted and they reject they form: an automatic mechanism of push that provokes: I unhook him/it the rotation, the push and the rearmament of the zipper. Such mechanism has the essential assignment to push with violence and alternation in the moment and to the correct point the two extremities of the zipper where the have fixed "magnets inclined permanent"di and control, approaching when enough those of push to the magnets "receivers of push" that they are found in position on the element "circular rotatory" in movement. This operation will determine the push, cause of the opposition of the poles of the same sign, to surrender they will be therefore, the mobile parts: and that is the element "circular rotatory", and the wing of the zipper that the push has provoked and it will do her/it immediately reenter so that not to hinder with the flow of the magnets of push, the run in action of the element "circular rotatory", and to syncronize him to immediately be ready for the following cycle.

### Conclusions:

This description is reported to a device of small dimensions and little surrender, in fact as device is illustrated twos times, for devices without limits of surrender and consistence they will increase therefore, the "times" understood as elements to fall and all the described parts understood the permanent magnets will have dimensions, characteristics and distance of positioning of the magnets adjusted to the demand.
Found man can be employed for varied uses and particularly as "motor to push magnetic strength" and therefore, to move rotors of dynamo, alternators, pomps, utensils etc. to have energy to cost zero.

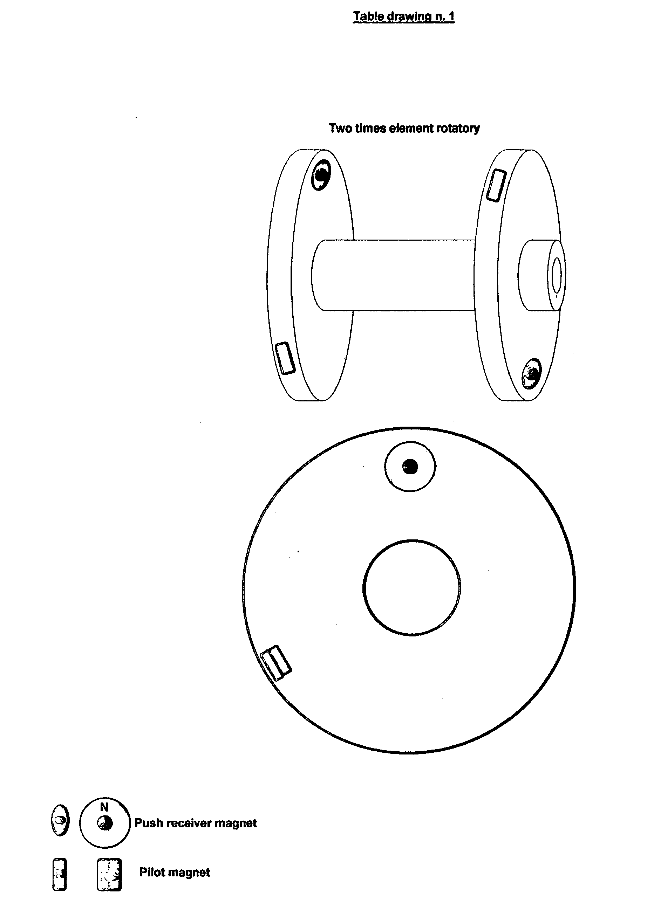

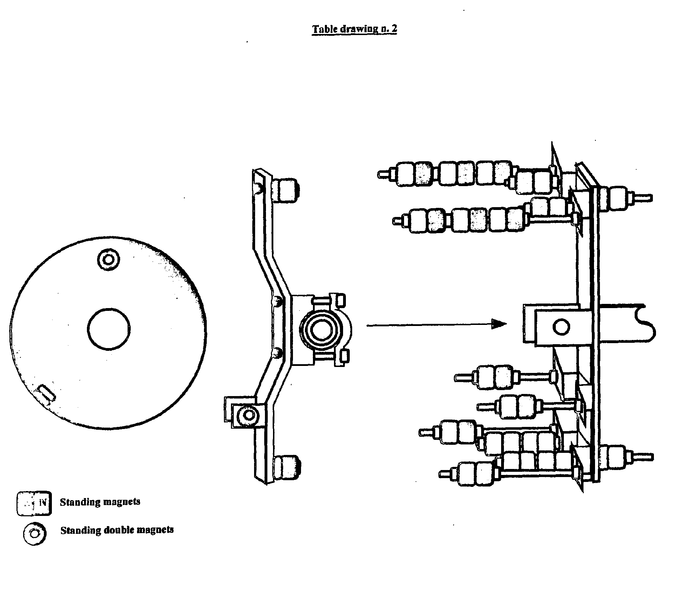

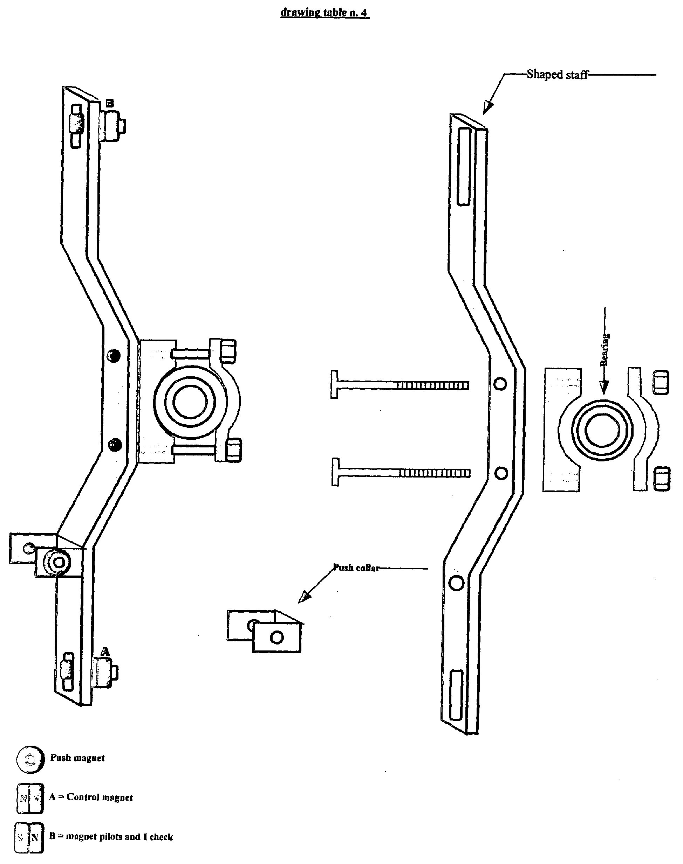

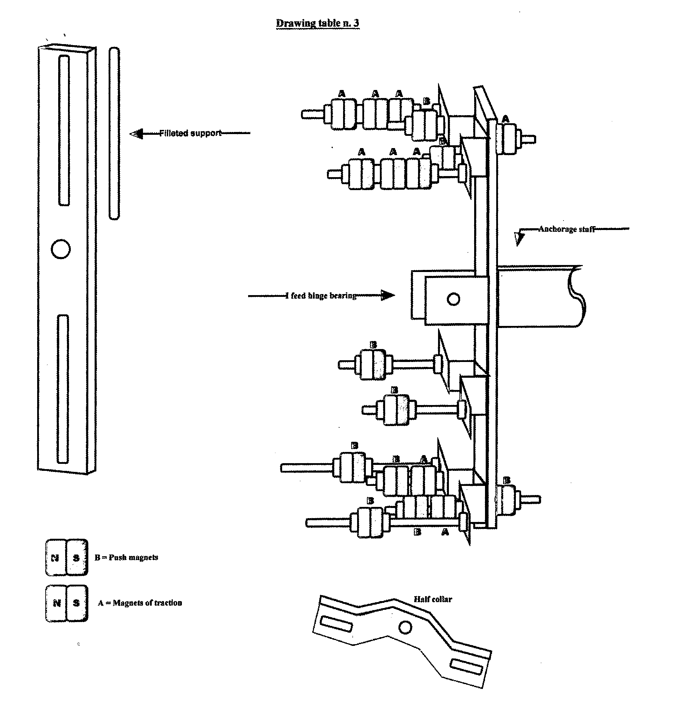

## Claims

1. All the rotatory elements of any dimension and form realized with the principle of the rotation to push with magnetic strength, and disposition syncronized of magnets permanent receivers of push of any form, greatness and strength, on both the façades, with magnet or other element set on the circular surface that serves from pilot for I unhook him/it some integrated zipper in the mechanism of push;

2. Fixed part of push conceived as described, of any form or greatness with one or more magnets permanent of any form, greatness and strength, adjustable and used for the strength of push and control zipper, also with different disposition on the elements of assemblage;

3. Zipper of any form or greatness assembled as also described with different disposition, strength and greatness of the magnets of push, control and magnet or other element receiver he/she pilots from rotatory element;

4. The whole whole even if otherwise assembled with one or more elements to fall positioned on the axle of rotation.
